# EUROPEAN PATENT SPECIFICATION

(11) **EP 0 654 383 B1**
(45) Date of publication and mention of the grant of the patent: **01.10.2003**
(21) Application number: 94117450.0
(22) Date of filing: 04.11.1994
(51) Int. Cl.: B60R 25/04, G05B 19/16

(54) **Vehicle controller**
Regler für ein Fahrzeug
Contrôleur pour un véhicule

(30) Priority: 22.11.1993 JP 29202093
(43) Date of publication of application: 24.05.1995
(73) Proprietor: HONDA GIKEN KOGYO KABUSHIKI KAISHA, Minato-ku Tokyo (JP)
(72) Inventor: Yoshida, Susumu, c/o K. K. Honda Gijutsu Kenkyusho, Saitama (JP); Nakazawa, Takeshi, c/o K. K. Honda Gijutsu, Saitama (JP)
(74) Representative: Huber, Bernhard, Dipl.-Chem.

(56) References cited:
- EP-A- 0 456 916
- WO-A-94/26564
- GB-A- 2 252 847

## Description

### [DETAILED DESCRIPTION OF THE INVENTION]

### [Field of Utilization in Industry]

The present invention relates to a vehicle controller comprising an engine control unit provided with an electric circuit for starting and stopping the engine of a vehicle, and a key for controlling the operation of the engine in cooperation with the engine control unit.

### [Related Art]

In some known vehicle controllers, a mechanical ignition key is used for starting and stopping the engine of, for example, a motorcycle. When the engine is started by means of an engine starting arrangement that is operated with such a mechanical ignition key, it is possible to start the engine unduly without using the ignition key. An expensive, complicated, preventive arrangement is necessary for preventing undue starting of the engine. Accordingly, the computerized control of starting and stopping of the engine has been desired in recent years.

Incidentally, ignition timing for timing the ignition system of an engine is varied according to the condition and the service condition of the engine and, therefore, data for the computerized control of ignition timing stored in a ROM must be changed.

An apparatus disclosed in Japanese Patent Laid-open (Kokai) No. 2-191870 stores adjusting data for changing parameters for timing ignition in a data storage means, changes the adjusting data stored in the data storage means for new adjusting data transmitted to the data storage means according to instructions given by a communicating means.

A vehicle controller according to the preamble of claim 1 is known from GB-A-2252847.

GB-A-2252847 describes an engine management system comprising a removable contactless smart card having an electronic memory element included therein. At least part of the information required by a microprocessor for controlling engine function is held in the token memory. Therefore, the vehicle cannot be operated without this token. In an embodiment, data representing a part of a control program is held in the token memory element.

The data transferred from the card might be a simple ID code, basic settings or signals to start the engine or might be control information which must be accessed continually during use. For security purposes, each management unit/card combination may store different parts of the control information or program in the card memory, so that a card from one vehicle cannot be used to operate another vehicle having a similar engine management system.

A similar system for furnishing protection against theft of motor vehicles is described in EP-A-0456916. The system also comprises a card having a certain data storage capacity.

### [Problem to be Solved by the Invention]

It is an object of the present invention to provide a controller for a vehicle, capable of simply and surely changing the engine control characteristic.

This object is achieved by a vehicle controller according to claim 1.

### [Function]

In the invention, the controller comprises at least two key cards, wherein engine control data stored in these key cards is different for providing at least two different modes of operation of the engine.

The controller according to the invention is therefore capable of surely changing the engine control characteristic by simply rewriting engine control data stored beforehand in the engine control unit with one of at least two different engine control data stored on the key cards. Thus, a changing of the engine control characteristic can be effected simply by using the key card representing the desired operation mode.

In an embodiment of the present invention, the power supply of the vehicle is turned on and all the control data stored beforehand in the engine control unit is changed for the control data stored in the storage means of the key card when the key card is loaded into the engine control unit. Accordingly, the control data can be optionally and easily changed according to user's requests.

### [Embodiments]

A vehicle controller in a preferred embodiment according to the present invention will be described hereinafter with reference to the accompanying drawings.

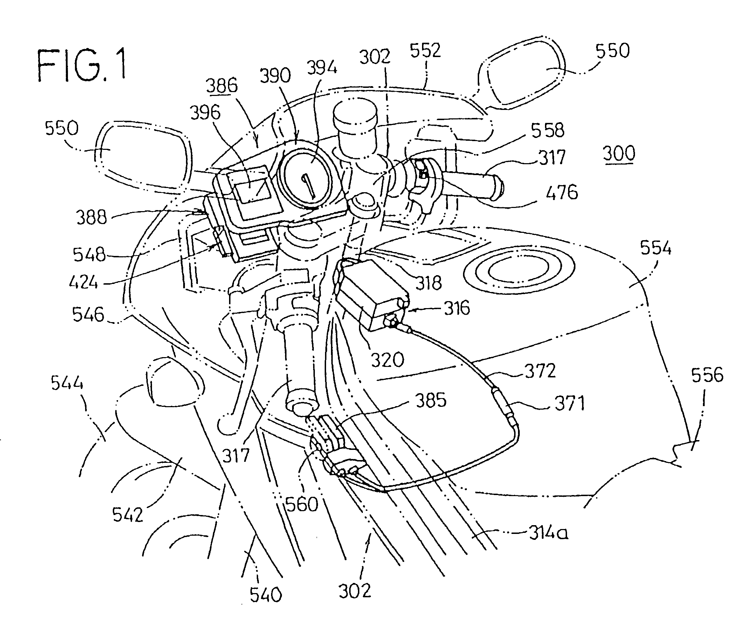

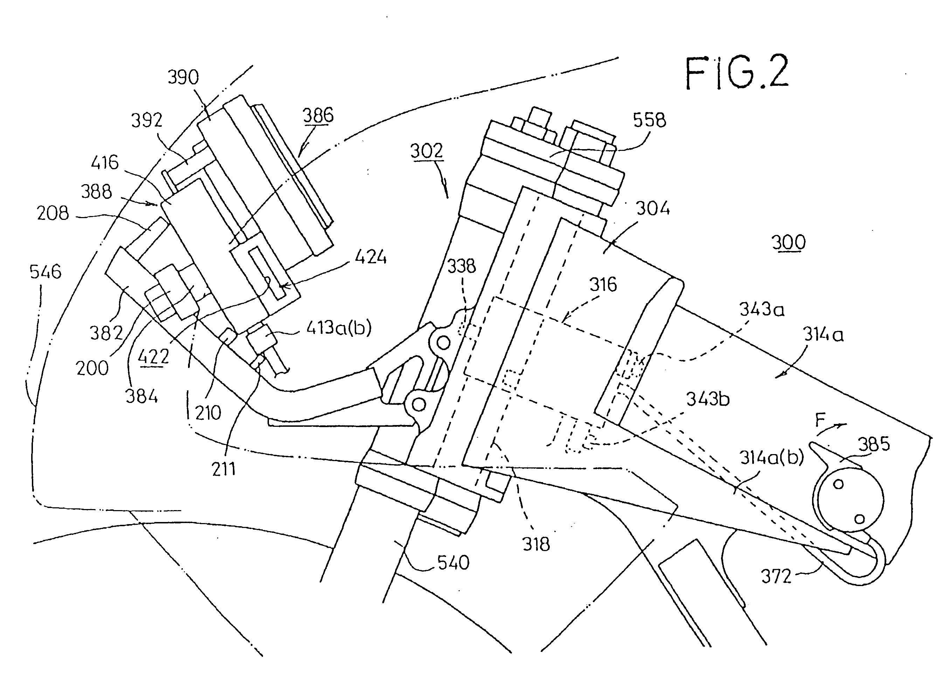

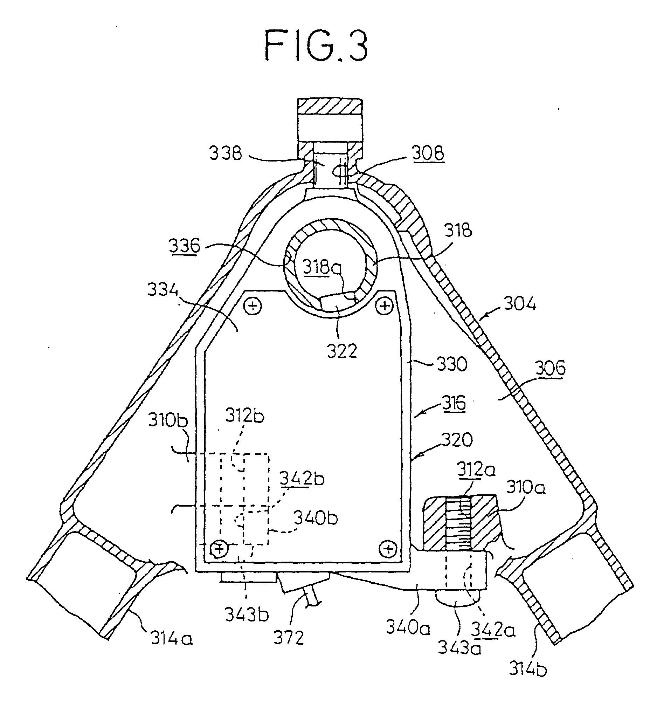

Figs. 1 and 2 are fragmentary views of a motorcycle 300 incorporating a vehicle controller in a preferred embodiment according to the present invention. The motorcycle 300 has a body frame 302. The body frame 302 has a head frame 304 transversely expanding toward the rear as shown in Fig. 3. The head frame 304 defines a chamber 306 opening toward the rear.

As shown in Fig. 3, the head frame 304 has a hole 308 opening into the front portion of the chamber 306, and is provided in its rear end with brackets 310a and 310b provided respectively with threaded holes 312a and 312b. Main frames 314a and 314b extend backward from the opposite sides of the rear end of the head frame 304.

As shown in Fig. 1, a steering bar 317 is joined to the upper end of a front fork 540, a front fender 542 is fastened to the lower portion of the front fork 540, and a front wheel is held for rotation on the lower end of the front fork 540. The front side of the steering bar 317 is covered with a fairing 546. A headlight 548, rearview mirrors 550 and a screen 552 are held on the fairing 546. A fuel tank 554 is mounted on the main frames 314a and 314b, and a seat 556 is disposed behind the fuel tank 554. In Fig. 1, indicated at 558 is a top bridge disposed on the side of the steering bar 317.

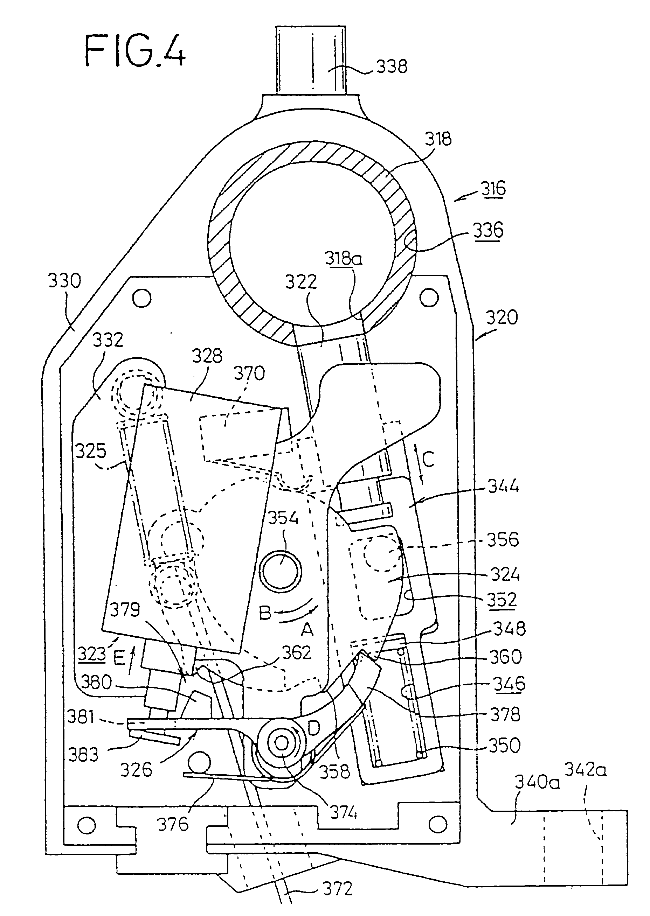

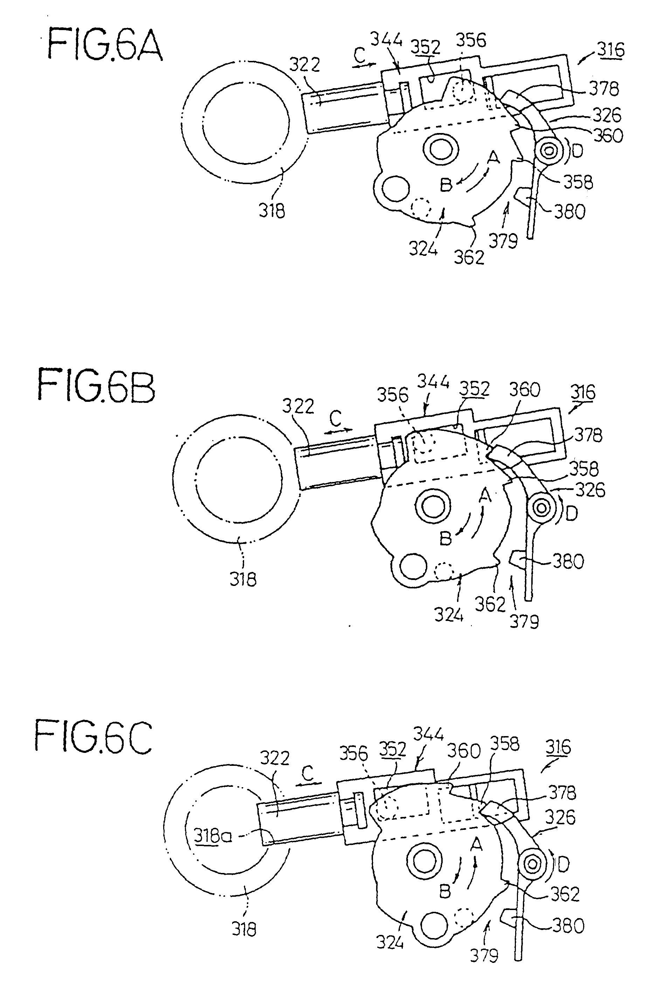

A steering bar locking unit 316 is placed within the chamber 306 of the head frame 304. The steering bar locking unit 316 has a housing 320 held in the chamber 304 of the head frame 304 so as to receive a stem pipe 318 that turns together with the steering bar 317. Contained in the housing 320 are a steering bar locking member 322 capable of being moved between a locking position where the locking member 322 engages the stem pipe 318 to lock the steering bar 317 and a releasing position where the locking member 322 releases the stem pipe 318 to allow the steering bar 317 to turn, a rotating member 324 that is turned in the direction of the arrow A (Fig. 4) to shift the locking member 322 from the releasing position to the locking position, and a driving device 323 for turning the rotating member 324 in angular steps through a first position (ON position shown in Fig. 6A) to allow the steering bar 317 to turn and the engine to operate, a second position (OFF position shown in Fig. 6B) to allow the steering bar 317 to turn and to inhibit the engine from operating, and a third position (locking position shown in Fig. 6C) to lock the steering bar 317.

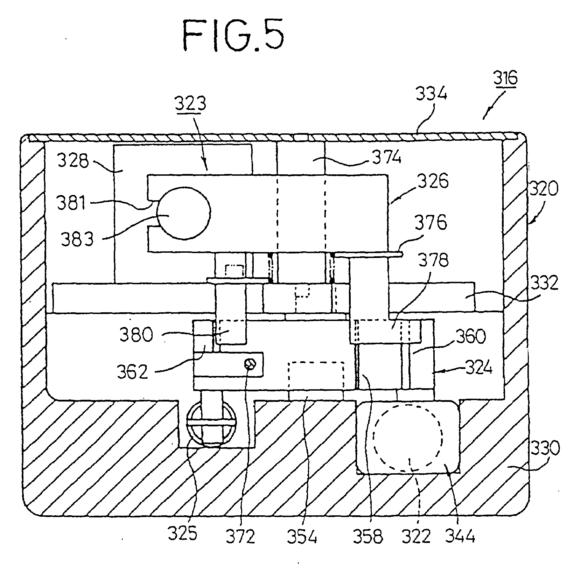

As shown in Figs. 4 and 5, the driving device 323 comprises a spring 325 for biasing the rotating member 324 in the direction indicated by the arrow B opposite the direction indicated by the arrow A, a retaining member 326 for retaining the rotating member 324 at a predetermined angular position, and a solenoid 328 that is actuated when a starter switch is closed to disengage the retaining member 326 from the rotating member 324 to enable the rotating member 324 to be turned stepwise from the first position through the second position to the third position.

The housing 320 has a case 330, an inner lid 332 and a cover 334. The housing 320 is provided with a through hole 336 for receiving the stem pipe 318. A pin 338 to be fitted in a hole 308 formed in the head pipe 304 projects from the front end of the case 330. Projections 340a and 340b are formed on the rear end of the case 330 at positions respectively corresponding to the brackets 310a and 310b of the head frame 304, and holes 342a and 342b are formed in the projections 340a and 340b so as to correspond to the threaded holes 312a and 312b, respectively, as shown in Fig. 3. With the pin 338 fitted in the hole 308, bolts 343a and 343b are inserted through the holes 432a and 342b and screwed in the threaded holes 312a and 312b, respectively, to fasten the housing 320 to the head frame 304.

As shown in Fig. 4, the cylindrical locking member 322 is fixed to one end of a sliding member 344 capable of moving in directions indicated by the arrows C. A slot 346 is formed in the other end of the sliding member 344, a fixed lug 348 formed within the housing 320 is received in the slot 346, and a spring 350 is extended between the fixed lug 348 and the end wall of the slot 346. A rectangular guide slot 352 is formed in the substantially middle portion of the sliding member 344.

The rotating member 324 is supported pivotally on a pin 354 within the housing 320. An eccentric pin 356 projecting from the periphery of the rotating member 324 is received in the guide slot 352 of the sliding member 344. The rotating member 324 is provided in its circumference with a first tooth 358 with which the retaining member 326 engages to hold the rotating member 324 at the third position (locking position), a second tooth 360 with which the retaining member 326 engages to hold the rotating member 324 at the second position (OFF position), and a cam section 362 separated a predetermined angular distance in the direction of the arrow B from the first tooth 358.

One end of the spring 325 is connected to the rotating member 324 at a position in the periphery substantially diametrically opposite the eccentric pin 356. A cable 372 has one end connected to the rotating member 324 and the other end connected to an operating member, which will be described later, extending outside from the housing 320 (Fig. 1)

The retaining member 326 is supported pivotally on a pin 374 fixedly disposed within the housing 320 and is biased in the direction of the arrow D (Fig. 4) with a spring 376 mounted on the pin 374. The retaining member 326 has a retaining projection 378 and a projection 380, which project toward the rotating member 324. The retaining projection 378 is able to engage with the first tooth 358 and the second tooth 360. The projection 380 and the cam section 362 constitute a holding mechanism 379 for holding the rotating member 326 at the second position (OFF position). A hole 381 opening into a slit is formed in the extremity of the retaining member 326, the extremity of a plunger projecting from the solenoid 328 is passed through the hole 381 and the expanded end 383 is in engagement with the extremity of the retaining member 326.

As shown in Fig. 1, an operating lever 385 is supported pivotally in parallel to a choke lever 560 on the head frame 304 at a position under the steering bar locking unit 316. The other end of the cable 372 connected to the rotating member 324 of the steering bar locking unit 316 is connected to the operating lever 385. When the rotating member 324 is turned, the operating lever 385 is turned through a first position, a second position and a third position. As shown in Fig. 1, a first portion of the cable 372 connected to the rotating member 324 and a second portion of the cable 372 connected to the operating lever 385 are connected by a connecting device 371. The connecting device 371 is disengaged to separate the first and the second portion of the cable 372 to enable individual maintenance on the steering bar locking unit 316 and the operating lever 385.

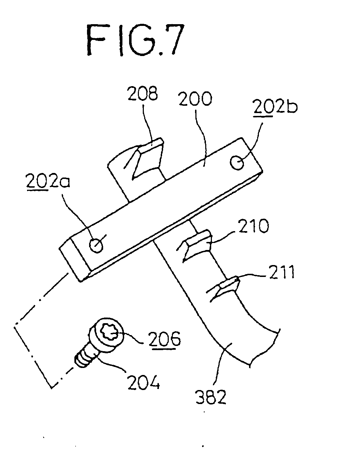

As shown in Fig. 2, a vehicle controller 386 in a third embodiment according to the present invention is held by a pair of holding members 384 on a stay 382 extending toward the front from the head frame 304. A stay bar 200 is fixed to the stay 382 so as to extend transversely. As shown in Fig. 7, the stay bar 200 is provided at positions near the opposite ends thereof with fastening holes 202a and 202b for receiving bolts 204 for fastening the vehicle controller 386 thereto. Bolts 204 inserted through the fastening holes 202a and 202b are screwed in threaded holes, not shown, formed in a holding member 384 holding the main control unit 388 of the vehicle controller 386 to fasten the main control unit 388 to the stay bar 200. Each bolt 204 is a socket head bolt having a head provided with a socket 206 having a special shape to prevent the bolt 204 from being easily unfastened.

The stay 382 is provided with protrusions 208 and 210 on the opposite sides of the stay bar 200 to prevent the dislocation of the vehicle controller 386, and a protrusion 211 behind the protrusion 210 to prevent couplers 413a and 413b, which will be described later, from falling off. Thus, the vehicle controller 386 cannot be easily removed and the removal of the couplers 413a and 413b is prevented.

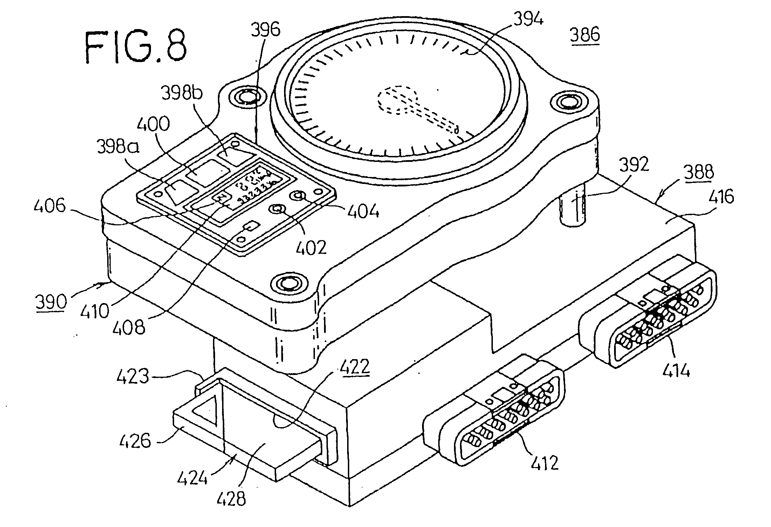

As shown in Fig. 8, the vehicle controller 386 comprises the main control unit 388 and an indicator unit 390. The indicator unit 390 is supported on posts 392 projecting upward from the main control unit 388 and has a first indicator (analog tachometer for indicating the engine speed of the engine) 394, and a second indicator (digital indicator) 396. The second indicator 396 is provided with direction indicators 398a and 398b, a high-beam indicator 400, a side stand indicator 402, a warning indicator 404, a neutral indicator 406, and a multifunction display 410 serving as a speedometer and to be operated by a function switch 408 to display travel distance, trip distance, cooling water temperature and warnings by turns.

When a key card 424 is inserted in the main control unit 388 through a slot 422 formed in the main control unit 388 with the push button of the function switch 408 depressed and the push button of the function switch 408 . is released after inserting the key card 424 into the main control unit 388, a number is displayed on the multifunction display 410. The number can be incremented by depressing the push button of the function switch 408. The displayed number can be set by depressing the push button of the function switch 408 continuously for ten seconds. This operation is performed for four digits to set a four-digit identification number. The power supply of the motorcycle can be turned on by entering the identification number in case the key card 424 is lost. When "0000" is registered, the resetting of the identification number is impossible. If wrong identification numbers are entered three times to start the engine, password protection cannot be called of unless the proper key card 424 is inserted in the main control unit 388.

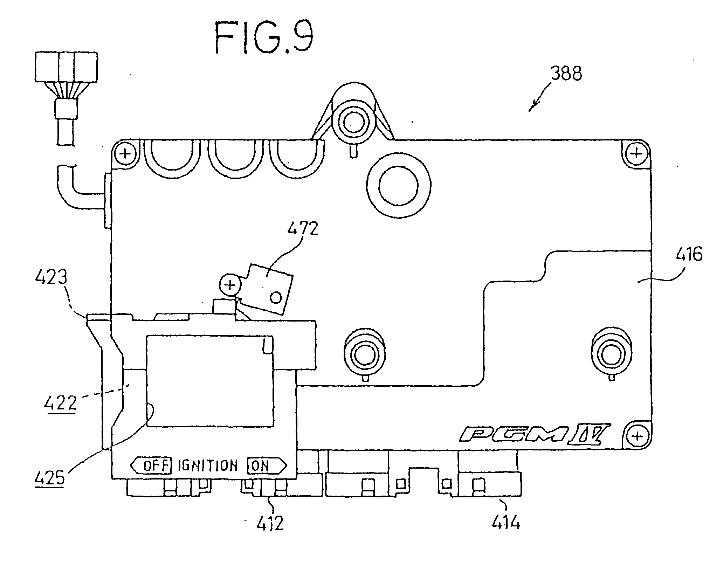

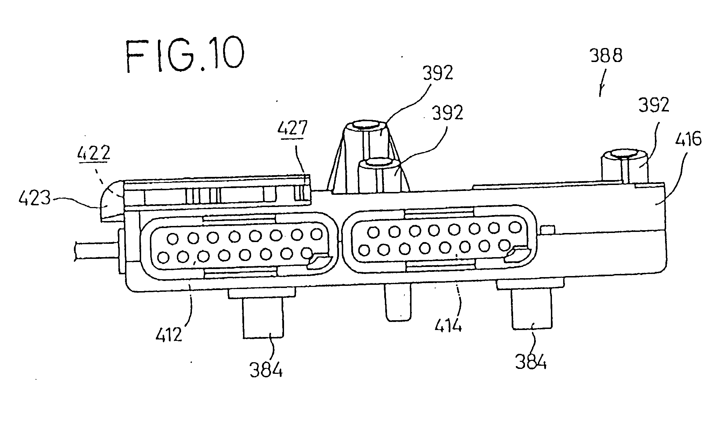

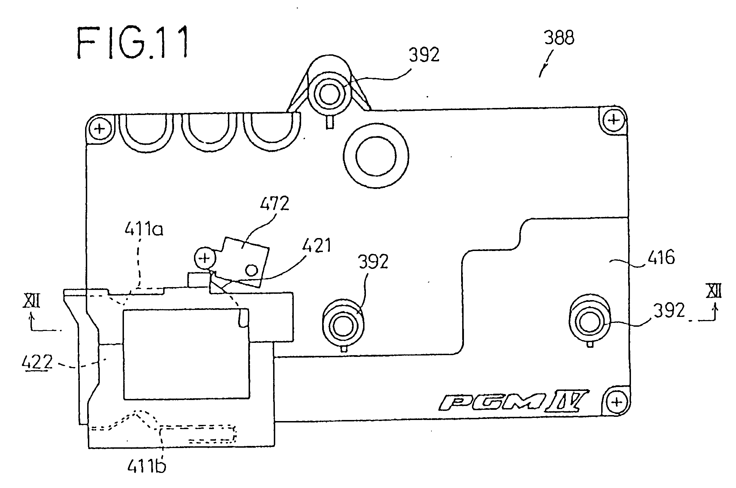

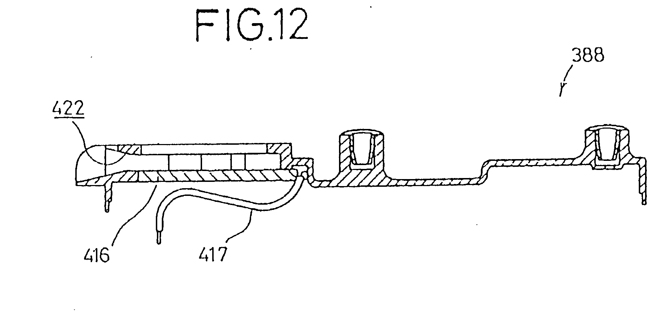

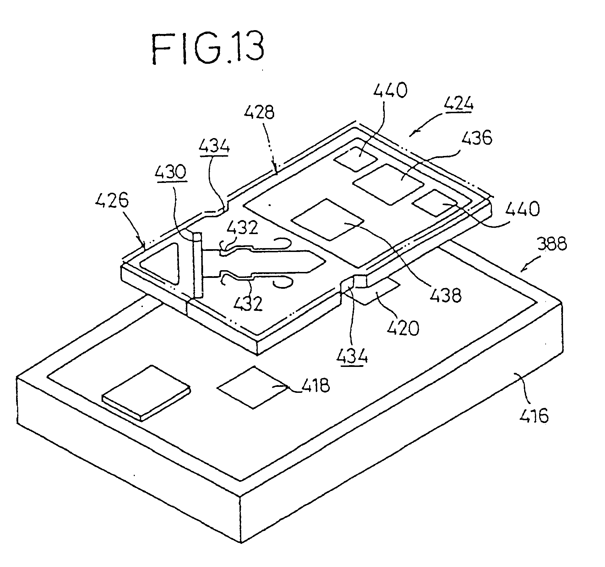

Figs. 9 and 10 are a plan view and a front view, respectively, of the main control unit 388, Fig. 11 is a schematic plan view of the main control unit 388, showing locking plates 411a and 411b included in the main control unit 388 to restrain the key card 424 from falling off the main control unit 388 and Fig. 12 is a sectional view taken on line XII-XII in Fig. 11. The main control unit 388 has a casing 416 provided with connectors 412 and 414 to which couplers 413a and 413b are connected to connect a power line connected to a battery, and signal lines to the main control unit 388. A transmitting generator coil 418 and a receiving communication coil 420 are contained within the casing 416 and are connected by a cable 417 to a CPU, which will be described later (Figs. 12 and 13). The slot 422 is formed in one side wall of the casing 416. The key card 424 having the shape of a flat plate can be inserted into and extracted from the casing 416 through the slot 422. When the key card 422 is inserted through the slot 422 into the casing 416, a spring 421 is bent elastically to close a key card detecting switch 472 (Fig. 11).

As shown in Fig. 8, a holding projection 423 projects from one end of the slot 422 to prevent a key member 426 from coming off the key card 424 inserted in the slot 422. As shown in Fig. 9, the main control unit 388 is provided with a window 425 to enable the visual recognition of the key card 424 inserted in the main control unit 388. Adhesion of dust and foreign matters to the key card 424 can be easily recognized through the window 425. As shown in Fig. 10, an opening 427 is formed opposite to the slot 422. Dust and the like adhering to the surface of a card reader can be pushed out through the opening 427 by inserting the key card 424 through the slot 422 into the main control unit 388.

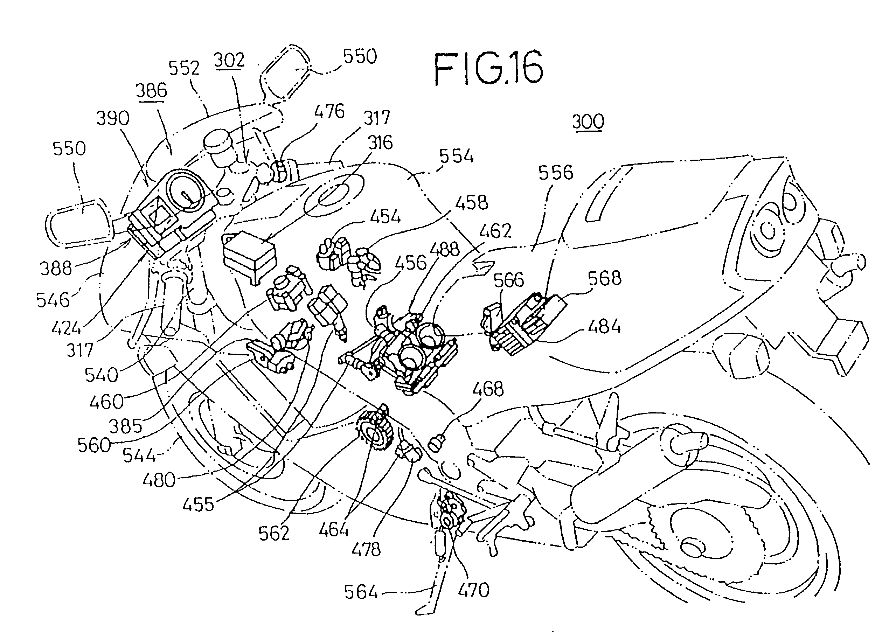

Referring to Figs. 13 to 15, the key card 424 comprises the aforesaid key member 426, and a substantially flat case (body) 428. One corner of the case 428 is cut to form a key receiving opening 430, and the key member 426 is inserted in the key receiving opening 430. A pair of locking plates 432 are disposed near the key receiving opening 430 to restrain the key member 426 inserted in the key receiving opening 430 from slipping out of the key receiving opening 430. Notches 434a and 434b are formed in the opposite sides of the case 428. A noncontact IC card (storage means) 436, a pair of receiving generator coils 438 corresponding to the transmitting generator coil 418 (rewriting means) of the control unit 388, and transmitting communication coils 440 corresponding to the receiving communication coil 420 are mounted on the surface of the case 428. As shown in Fig. 15, a recess 441 is formed in the back surface of the case 428 to avoid the direct sliding contact of the back surface with other members.

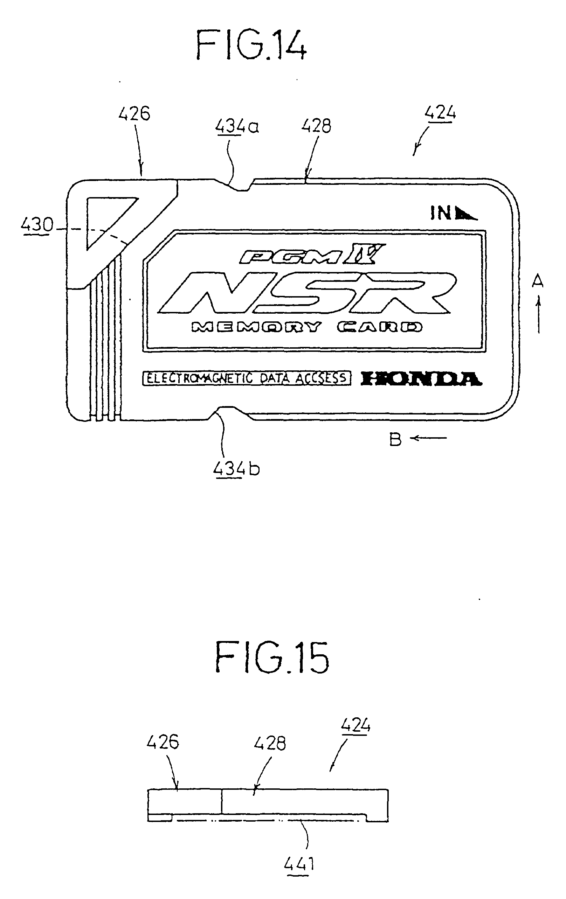

As shown in Figs. 11 and 14, the locking plate 411a engages with the notch 434a to restrain the key card 424 from movement in the direction indicated by the arrow B (Fig. 14), and the locking plate 411b engages with the notch 434b to bias the key card 424 in the direction indicated by the arrow A. When extracting the key card 424 through the slot 422, first the key card 424 is moved forcibly in a direction opposite the direction indicated by the arrow A against the resilience of the locking plate 411b to disengage the notch 434a and the locking plate 411a, and then the key card 424 is pulled in the direction indicated by the arrow B.

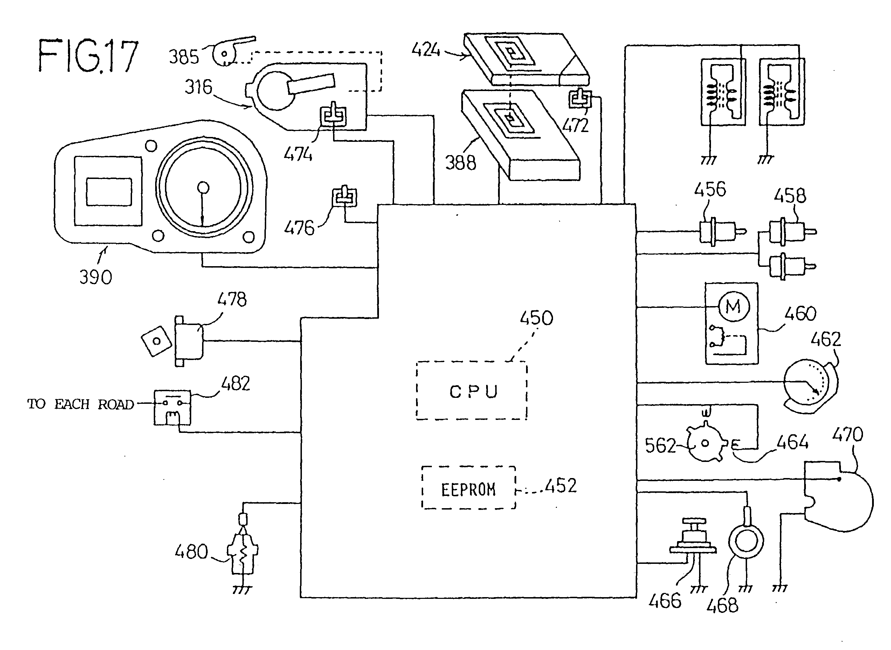

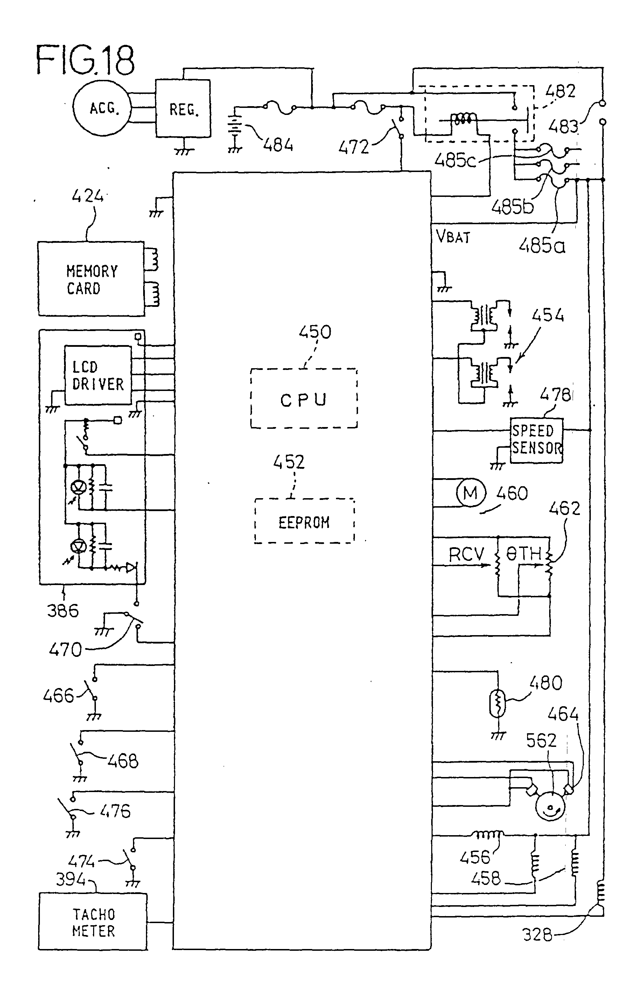

Figs. 16 and 17 shows the configuration of the vehicle controller 386, and Fig. 18 is a circuit diagram of the vehicle controller 386. The vehicle controller 386 has a CPU 450 provided with an EEPROM 452 for storing characteristic data including an identification number, and data provided by the odometer and the trip meter. Connected to the CPU 450 are an ignition coil 454, an oil pump solenoid 456, a pair of carburetor solenoids 458, an exhaust servomotor 460, a throttle opening sensor 462, a crank angle detector 464, an oil level switch 466, a neutral switch 468, a side stand switch 470, a traveling speed sensor 478, a temperature sensor 480, and a main relay 482 connected to loads other than the engine control system. Fuses 485a, 485b and 485c are connected to the main relay 482. In case the battery 484 has exhausted, a spare fuse is placed in an idle fuse hole 483 to connect an ACG electrically to the solenoid 328. When the kick starter is activated with the ACG electrically connected to the solenoid 328, the output current of the ACG is supplied to VBAT and the solenoid 328 to start the engine.

Referring to Fig. 16, a V-type two-cylinder engine, not shown, provided with spark plugs 455 is disposed under the fuel tank 554, an ignition coil is connected to the spark plugs 455. Carburetors 488 are disposed behind the engine, the throttle sensor 462 is combined with the carburetors 488, and the carburetor solenoids 458 for controlling the flow of air through the carburetors 488 are disposed under the fuel tank 554 and near the carburetors 488.

An ac generator 562 is connected to the left end of the crankshaft of the engine, and the crank angle detector 464 is disposed near the outer circumference of the ac generator 562. A traveling speed sensor 478 is disposed near the left end of the countershaft of the engine, and the neutral switch 468 is disposed below the countershaft. The side stand switch 470 is combined with the side stand 564. A regulating rectifier 566 and the battery 484 are disposed behind the carburetors 488 and under the seat 556. A fuse box 568 is connected to the battery 484.

The temperature sensor 480 for sensing the temperature of the cooling water is disposed above the engine. The servomotor 460 for driving a valve for controlling exhaust timing is disposed near the temperature sensor 480 and the steering bar locking unit 316.

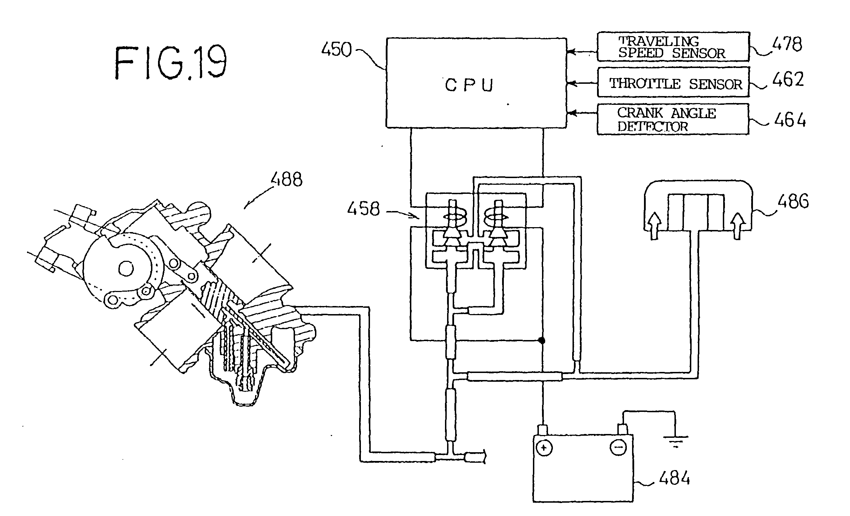

As shown in Fig. 19, the carburetor solenoids 458 are connected to the battery 484 and regulates the flow of air flowing through an air cleaner 486 into the carburetors 488 to feed an ideal air-fuel mixture from the carburetors 488 to the engine. The CPU 450 receives a pulse signal representing engine speed from the crank angle detector 464, the output voltage of the throttle sensor 462 representing an opening of the throttle valve, and a pulse signal representing the rotating speed of the countershaft from the traveling speed sensor 478, and determines the reduction ratio on the basis of the engine speed and the rotating speed of the countershaft. The CPU 450 is provided with a program map specifying the mode of operation of the carburetor solenoids 458 corresponding to the reduction ratio. The CPU 450 controls the carburetor solenoids 458 according to the traveling speed, the opening of the throttle valve and the engine speed on the basis of the program map so that an optimum air-fuel mixture suitable for the current traveling mode is supplied to the engine.

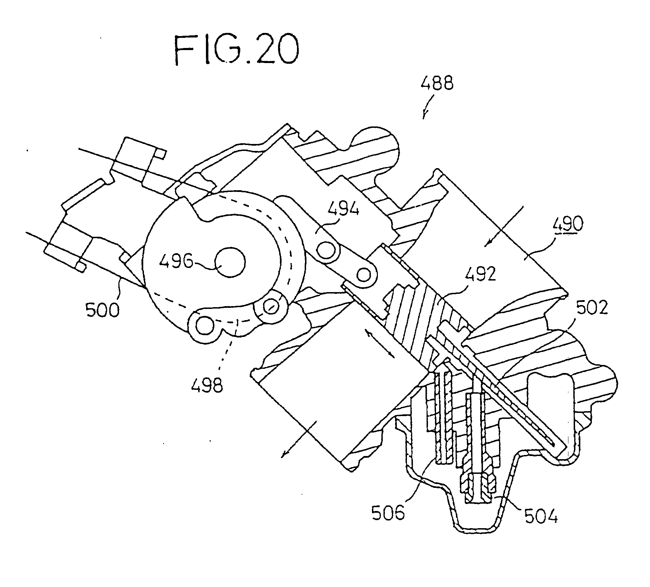

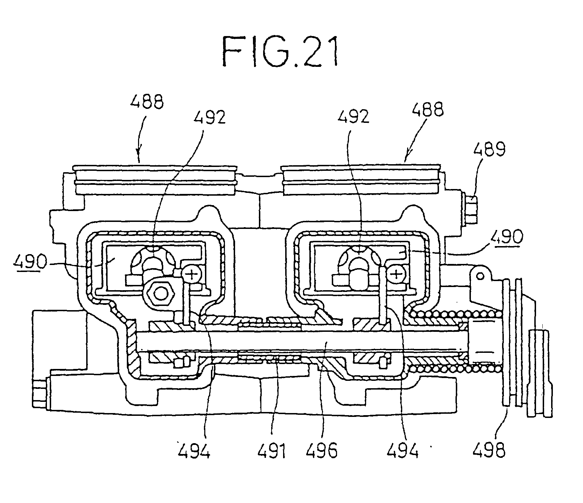

As shown in Fig. 20, each carburetor 488 has a throttle valve 492 disposed with its axis extended perpendicularly to an intake air passage 490. The throttle valve 492 is connected by a linkage 494 to a throttle shaft 496. As shown in Fig. 21, the throttle shaft 496 extends through both the carburetors 488. The carburetors 488 are fastened together with bolts 489 and a knock pin 491 is attached to the throttle shaft 496 at the junction of the carburetors 488.

The throttle shaft 496 is turned by means of a throttle pulley 498 and a throttle cable 500. Each throttle valve 492 is provided at its one end with a jet needle 502, and a main jet 504 and a slow jet 506 are formed near the needle jet 502 as shown in Fig. 20.

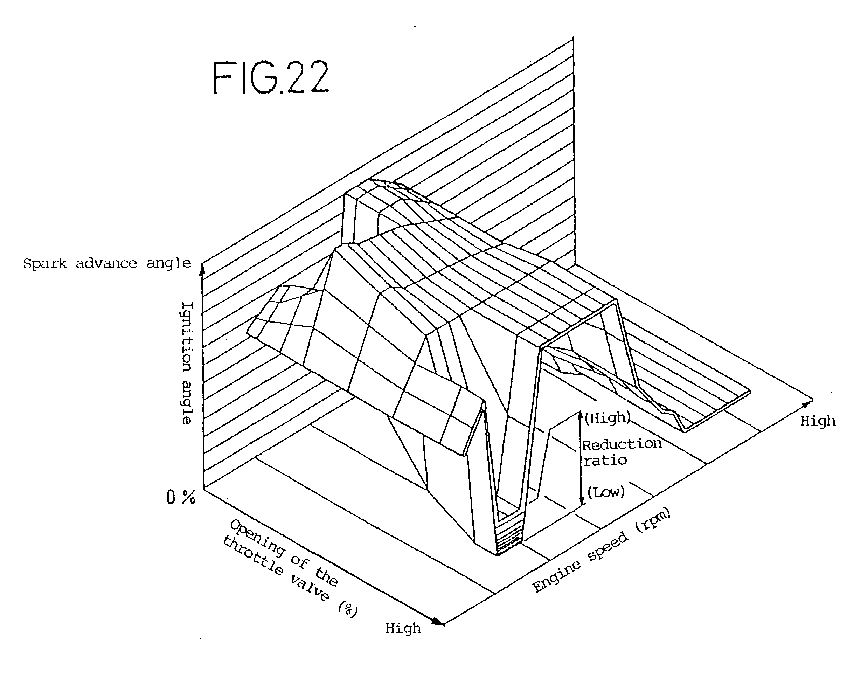

The ignition time is determined according to throttle opening (%), engine speed (rpm) and reduction ratio. Ignition timing characteristic diagram for the front bank of the engine is shown in Fig. 22 by way of example.

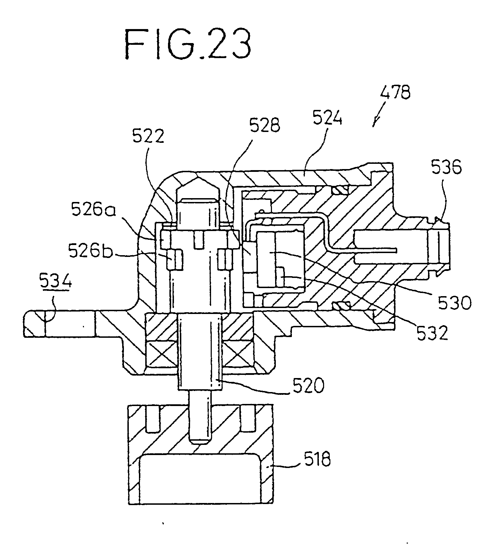

As shown in Fig. 23, the traveling speed sensor 478 has a sensor shaft 520 that rotates together with the countershaft, not shown, connected to a joint 518. The sensor shaft 520 is supported for rotation on a housing 524 and a thrust washer 522 is put on the inner end of the sensor shaft 520. The sensor shaft 520 is provided integrally with two gears 526a and 526b. A Hall IC 528 and a rare earth metal magnet 530 are disposed opposite to the gear 526b within the housing 524, and a yoke 532 is combined with the rare earth metal magnet 530. Magnetic flux acting on the Hall element of the Hall IC 528 varies as the sensor shaft 520 rotates, the Hall IC converts the output voltage signal of the Hall element into a rectangular pulse signal varying between 0 V and 5 V, and gives the rectangular pulse signal to the CPU 450. The housing 524 is provided with mounting holes 534, and a coupler 536 for connecting the housing 524 electrically to the CPU 450 is fixedly attached to the housing 524.

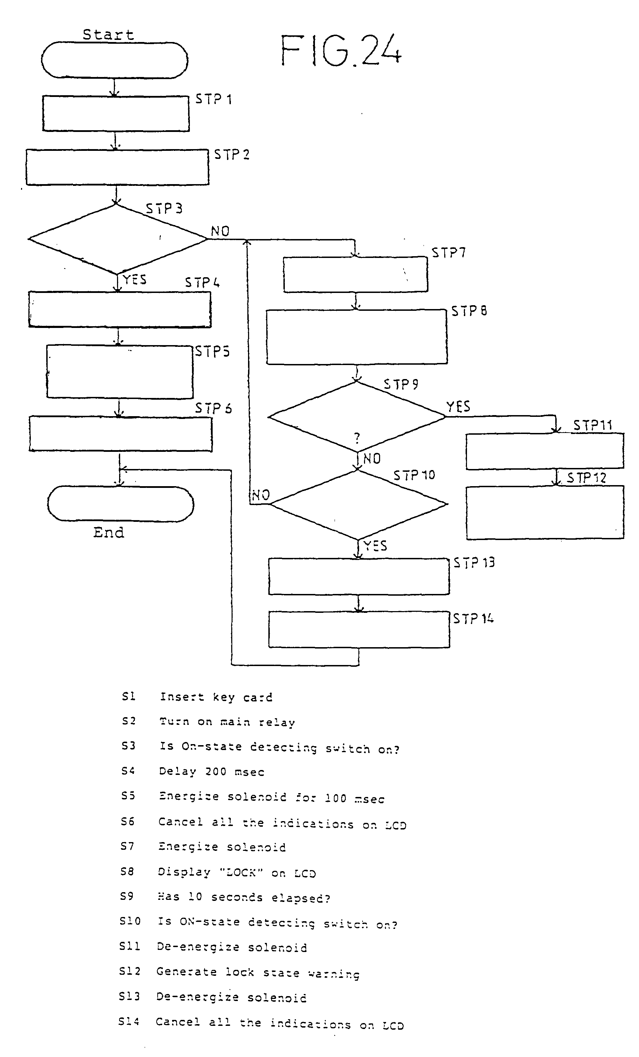

The operation of the vehicle controller thus constructed will be described hereinafter with reference to Fig. 24 in connection with that of the motorcycle 300.

When the key card 424 is inserted through the slot 422 into the main control unit 388 of the vehicle controller 386, the spring 421 is bent elastically to close the key card detecting switch 472, whereby the control unit is connected to the power supply. Then, a current flows through the transmitting generator coil 418 of the main control unit 388 to generate magnetic force and the receiving generator coil 438 of the key card 424 generates electric power. Then, the control data including the identification number stored beforehand in the IC card 436 are converted into currents by the power generated by the receiving generator coil 438 and the transmitting communication coils 440 send the current representing the control data through the receiving communication coil 420 of the main control unit 388 to the CPU 450.

When it is decided by the CPU 450 in step S1 that the proper key card 424 is inserted in the main control unit 388, the CPU 450 makes a circuit to supply power to the solenoid 328 of the steering bar locking unit 316 and establishes a CDI (capacitive discharge ignition) enable state. Then, in step S2, the main relay 482 is actuated, and then a query is made in step S3 to see if an ON-state detecting switch 274 is closed. When it is decided that the On-state switch is closed, namely, when the steering bar locking mechanism is disengaged, the procedure goes through step S4 to step S5 to energize the solenoid 328 for 100 msec to make sure that the steering bar is unlocked. Then, in step S6, all the indications on the multifunction display 410 (LCD) of the indicator unit 390 of the vehicle controller 386 are canceled.

If it is decided in step S3 that the steering bar locking mechanism is not disengaged, the solenoid 328 is energized in step S7, and then a message, "LOCK" is displayed on the LCD of the indicator unit 390 in step S8. The energization of the solenoid 328 for 100 msec and the interruption of energization of the solenoid 328 for 200 msec are repeated alternately to make the solenoid 328 generate a continuous working sound, which informs the user of incomplete disengagement of the steering bar locking mechanism.

When it is decided in step S9 that the solenoid 328 has been energized for 10 s or longer and it is decided in step S10 that the ON-state detecting switch 474 is not closed, current supply to the solenoid 328 is stopped in step S11, the warning indicator 404 is turned on to display a warning, "LOCK" in step S12. When the ON-state detecting switch 474 is turned on when the solenoid 328 is energized for a time less than 10 s, namely, the response to the query in step S10 is affirmative, the solenoid 328 is de-energized in step S13 and all the indications displayed on the LCD of the indicator unit 390 are turned off in step S14.

When the proper key card 424 is inserted in the main control unit 388 and the solenoid 328 is energized for the predetermined time, the expanded end 383 of the plunger is moved in the direction of the arrow E (Fig. 4). Consequently, the retaining member 326 is turned against the resilience of the spring 373 in a direction opposite the direction indicated by the arrow D (Fig. 4), the retaining projection 378 is disengaged from the first tooth 358 of the rotating member 324, and then the rotating member 324 is turned in the direction indicated by the arrow B by the spring 325.

When the rotating member 324 is turned in the direction indicated by the arrow B through a predetermined angle, the cam section 362 of the rotating member 362 comes into engagement with the projection 380 of the retaining member 326 and turns the retaining member 326 in the direction indicated by the arrow D. Consequently, the retaining projection 378 of the retaining member 326 engages with the second tooth 360 of the rotating member 324 to retain the rotating member 324. Thus, the rotating member 324 is turned from the first position (ON position) to the second position (OFF position). Then, the locking member 322 and the sliding member 344 are moved from a position shown in Fig. 6C away from the stem pipe 318 to a position shown in Fig. 6B under the cooperative guiding action of the eccentric pin 356 of the rotating member 324 and the slot 352 of the sliding member 344 to release the stem pipe 318, so that the steering bar 317 is able to turn. Meanwhile, the operating lever 385 connected to the rotating member 324 by the cable 372 is turned in the direction indicated by the arrow F (Fig. 2) through a predetermined angle to an OFF position.

Then, the solenoid 328 is energize further for a predetermined time to turn the retaining member 326 in the direction opposite the direction indicated by the arrow D so that the projection 378 is disengaged from the second tooth 360. Then, the rotating member 324 is turned further in the direction indicated by the arrow B to a position shown in Fig. 6A. Meanwhile, the operating lever is turned further in the direction indicated by the arrow F through the cable 372, whereby the starter is actuated to start the engine.

As shown in Fig. 8, the traveling speed of the motorcycle 300 is displayed on the multifunction display 410 of the indicator unit 390. When the push button of the function switch 408 is pushed repeatedly, travel distance, trip distance and the temperature of the cooling water are displayed by turns below the indication of the traveling speed. Since a traveling pulse counter overflows when the traveling speed is 7 km/h or below, the traveling speed is estimated on the basis of the frequency of overflow and the estimated traveling speed is displayed. If any traveling speed pulse is not generated for 0.5 sec or longer, an indication, "0 km/h" is displayed automatically. The traveling speed is displayed at intervals of 0.1 sec when the traveling speed is below 9 km/h, and at intervals of 0.5 sec when the traveling speed is 9 km/h or above to avoid the flickering of the ten's place. When the temperature of the cooling water exceeds a predetermined temperature, the indication of the temperature of the cooling water flickers and the warning indicator 404 is turned on.

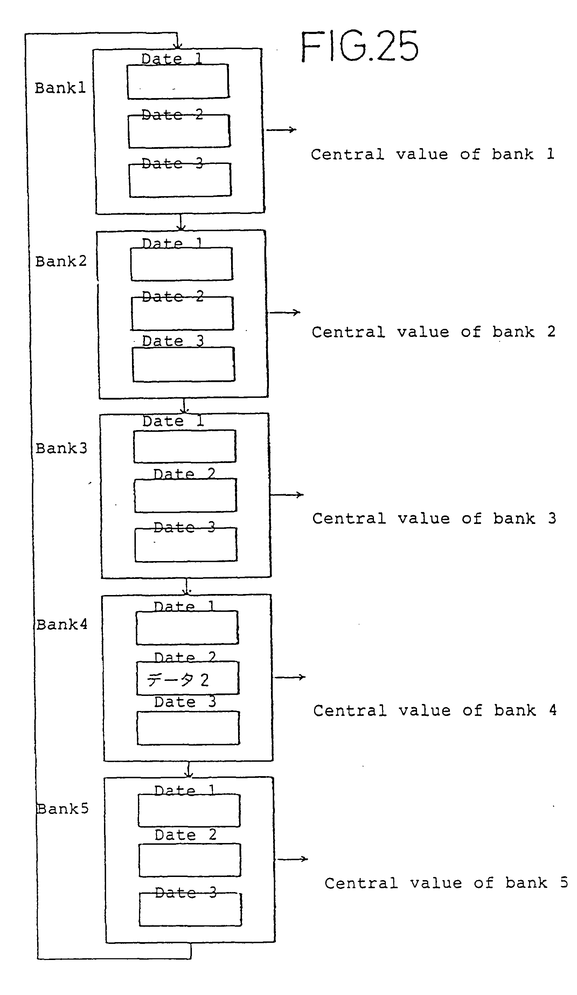

The travel distance is recorded in the unit of 1 km on the EEPROM 452. When the power supply is disconnected, the EEPROM 452 records a distance less than 1 km in the unit of 0.1 km. As shown in Fig. 25, the total travel distance is recorded at three positions in each bank every time the total distance increases 1 km, the bank shifts every 1 km from a bank 1 to a bank 5 sequentially, and returns from the bank 5 to the bank 1.

In each bank, the central value among the three data is determined by majority rule. If the three data are different from each other, the value of the data of the bank is indefinite. Theoretically, the difference between the central values of the adjacent banks must be 1 km. Actually, the maximum bank value differing by 1 km from the second maximum bank value is selected as the total travel distance. After the total travel distance has been determined, integration of cumulative data less than 1 km recorded at other addresses is started. When any maximum bank value is determined, it is decided that the total travel distance is indefinite and an indication, "...km" is displayed and the warning indicator 404 is turned on.

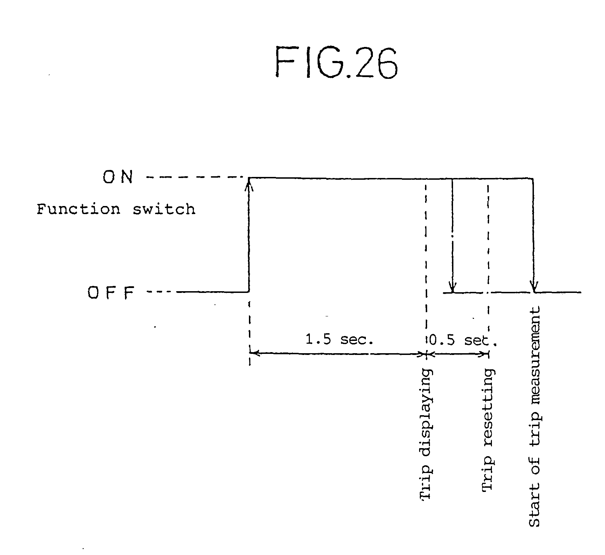

The trip distance is reset by the following procedure. As shown in Fig. 26, the current trip distance is displayed on the multifunction display 410 after the push button of the function switch 408 has been continuously pressed for 1.5 sec, the trip distance is reset to 0 km when the push button of the function switch 408 is pressed further for 0.5 sec (2.0 sec in total), and then the measurement of trip distance is started when the push button of the function switch 408 is released. If the push button of the function switch 408 is released in a time in the range of 1.5 sec to 2.0 sec, the current trip distance is displayed.

The multifunction display 410 has a plurality of warning functions; an indication, "OIL" is displayed when the quantity of the oil decreases below a predetermined value, an indication, "CARD" is displayed when the key card 424 is about to come off the main control unit 388 while the motorcycle 300 is traveling, an indication, "SPEED" is displayed when the traveling speed exceeds 85 km/h, an indication, "OFF" is displayed when a kill switch is turned off, an indication, "Err. 1" is displayed when the input voltage of the control unit is higher than a predetermined voltage, an indication, "Err. 2" is displayed when the exhaust valve is locked, and an indication, "Err. 3" is displayed when the throttle sensor 462 malfunctions.

If those troubles occur simultaneously, the corresponding warnings are displayed alternately or by turns, and a travel distance at the start of displaying the warnings and a trip distance from the start of displaying the warnings are recorded on the EEPROM 452. This travel distance and the trip distance are displayed on the multifunction display 410 when the push button of the function switch is operated. When the temperature of the cooling water is 35-C or below or when the temperature sensor malfunctions, an indication, "---C" is displayed.

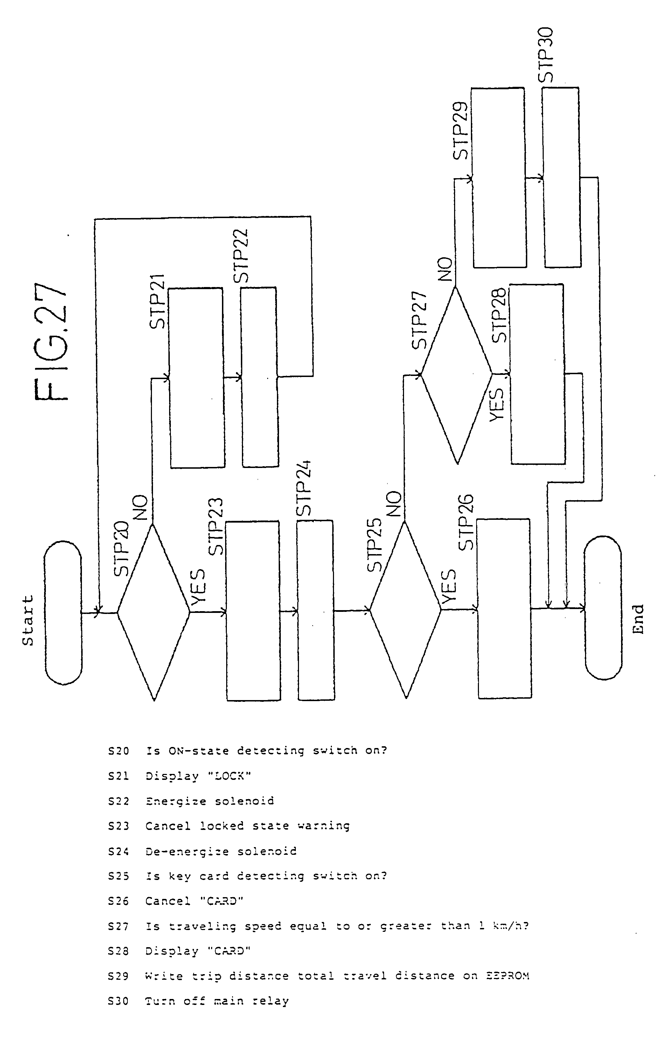

A control procedure represented by a flow chart shown in Fig. 27 is carried out to prevent locking the steering bar while the motorcycle 300 is traveling and to prevent the key card 424 from coming off the main control unit 388. A query is made instep S20 to see if the ON-state detecting switch 474 is closed. If the response in step S20 is negative, the warning, "LOCK" is given in step S21 and then the solenoid 328 is energized in step S22. If the ON-state detecting switch 474 is closed, namely, if the response in step S20 is affirmative, the warning, "LOCK" is canceled in step S23 and the solenoid 328 is de-energized in step S24.

A query is made in step S25 to see if the key card detecting switch 472 is closed. If the response in step S25 is affirmative, the warning,"CARD" is canceled in step S26. If the response in step S25 is negative, a query is made in step S27 to see if the traveling speed is 1 km/h or higher. If the response in step S27 is affirmative, the warning, "CARD" is given in step S28. When the traveling speed is below 1 km/h, namely, the motorcycle 300 is stopped, and then the trip distance and the total travel distance is written on the EEPROM 452 in step S29 and the main relay 482 is turned off in step S30.

Incidentally, the operating lever 385 is turned in a direction opposite the direction indicated by the arrow F to reduce the engine speed after the motorcycle 300 has reached the destination and the motorcycle 300 has been stopped. Consequently, the cable 372 pulls the rotating member 324 to turn the rotating member 324 in the direction indicated by the arrow A (Fig. 4) against the resilience of the spring 325, consequently, the retaining projection 378 is brought into engagement with the second tooth 360 to retain the rotating member at the OFF position as shown in Fig. 6B, so that the ignition circuit is opened to stop the engine.

When the rotating member 324 is retained at the OFF position, the stem pipe 318 is unlocked. Therefore, the steering bar 317 is turned fully in a predetermined direction, for example, counterclockwise, and the operating lever 385 is turned further in the direction opposite the direction indicated by the arrow F to lock the steering bar 317. Then, the cable 372 turns the rotating member 324 in the direction indicated by the arrow A, the retaining projection 378 is brought into engagement with the first tooth 358, so that the locking member 322 comes into engagement with the step pipe 318 to lock the stem pipe 318 as shown in Fig. 6C.

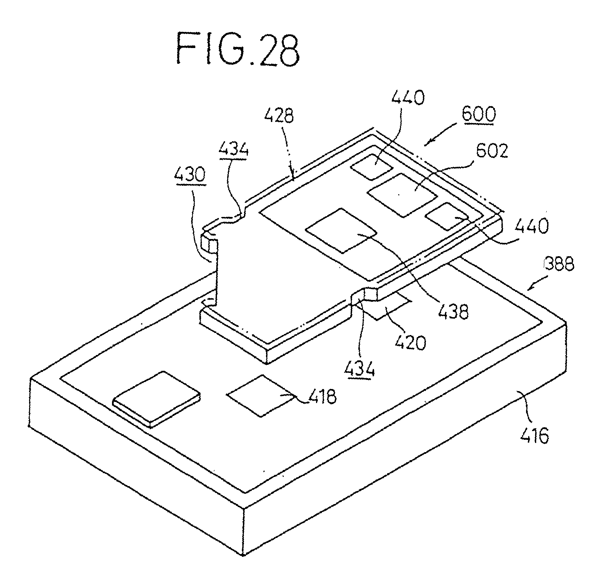

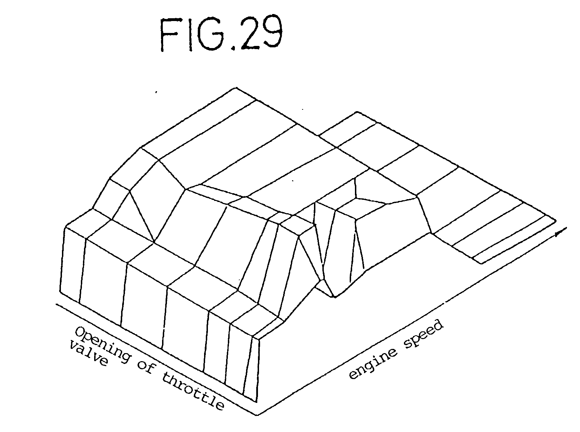

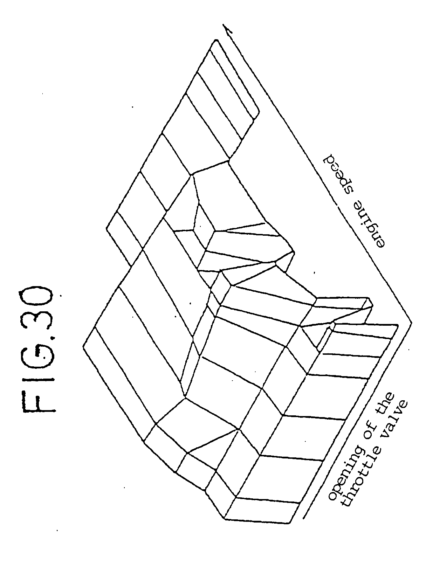

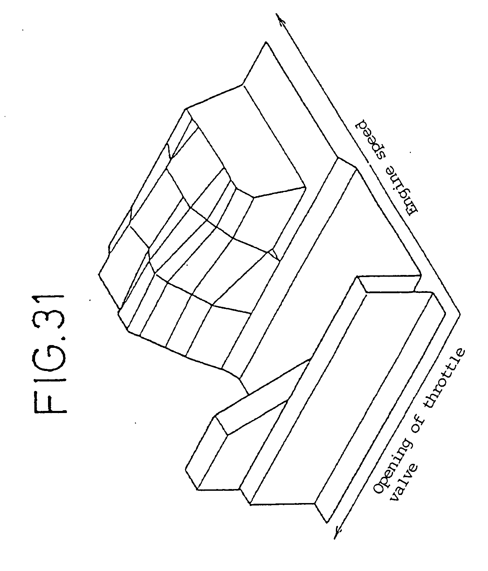

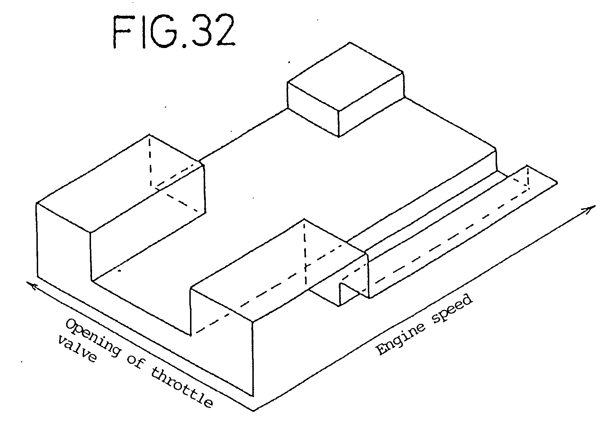

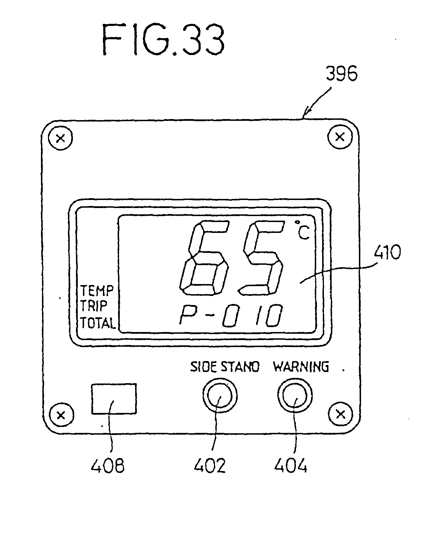

A special racing key card 600 not provided with any key member as shown in Fig. 28 is used when the motorcycle 300 is entered in a race. The racing key card 600 is provided with an IC card 602 storing control data for controlling the motorcycle 300 in a racing mode; that is map data concerning the ignition timing characteristic for the front cylinder as shown in Fig. 29, an ignition timing characteristic for the rear cylinder as shown in Fig. 30, an opening characteristic for the RC valve as shown in Fig. 31, and a carburetor solenoid characteristic as shown in Fig. 32 is stored in the IC card 602. As shown in Fig. 33, the temperature of the cooling water is displayed on the multifunction display 410 instead of the traveling speed and a program number is displayed below the temperature. Also stored in the IC card 602 are data for preventing alteration, the data of past record and the data for speed warning.

The racing key card 600 is effective only when the oil level switch 466, the neutral switch 468 and the side stand switch 470 are grounded. Record of the use of the racing key card 600 is stored in the EEPROM 452, and the record can be displayed on the multifunction display 410 by operating the push button of the multifunction switch 408. Fixed values, the sum of which is a fixed value, are placed at the ends of the control data. The CPU 450 examines the sum of the fixed values to see if the control data are proper ones, i.e, if the racing key card 600 is a proper one. Once it is determined that the control data are proper and the control data are loaded into the CPU 450, the CPU 450 examines only the sum of the fixed values or the program number of the racing key card 600 for the next and the following occasions for using the racing key card 600.

When the racing key card 600 is inserted through the slot 422 into the main control unit 388 for the first time, all the control data previously stored in the vehicle controller 386 are replaced with the control data for racing stored in the IC card 436 of the racing key card 600. Therefore, the motor cycle 300 can be controlled for ordinary touring or for racing simply by selectively using the key card 424 or the racing key card 600. Thus, the vehicle controller has a simple configuration and is capable of dealing with different modes of operation of the motorcycle.

### [Effect of the Invention]

As is apparent from the foregoing description, according to the present invention, the electric system of the vehicle is connected to the power supply and all the control data previously stored in the engine control unit is replaced with the control data stored in the storage means of the key card when the key card is loaded into the engine control unit. Accordingly, the control data can be optionally and readily changed according to a desired mode of operation of the vehicle

### [BRIEF DESCRIPTION OF THE DRAWINGS]

### [Fig. 1]

Fig. 1 is a perspective view of an essential portion of a motorcycle incorporating a vehicle controller in a preferred embodiment according to the present invention.

### [Fig. 2]

Fig. 2 is a fragmentary side view of the motorcycle.

### [Fig. 3]

Fig. 3 is a partly sectional plan view of a steering bar locking unit included in the vehicle controller and combined with the head frame of the motorcycle.

### [Fig. 4]

Fig. 4 is a plan view of the steering bar locking unit, in which a cover is removed.

### [Fig. 5]

Fig. 5 is a longitudinal sectional view of the steering bar locking unit.

### [Fig. 6]

Figs. 6A, 6B and 6C are plan views of the steering bar locking unit placed in an ON position, an OFF position and a locking position, respectively.

### [Fig. 7]

Fig. 7 is a perspective view of a combination of a stay and a sty bar for holding the vehicle controller.

### [Fig. 8]

Fig. 8 is a perspective view of the vehicle controller.

### [Fig. 9]

Fig. 9 is a plan view of a main control unit included in the vehicle controller.

### [Fig. 10]

Fig. 10 is a front view of the main control unit.

### [Fig. 11]

Fig. 11 is a schematic plan view of the main control unit.

### [Fig. 12]

Fig. 12 is a sectional view taken on line XII-XII in Fig. 11.

### [Fig. 13]

Fig. 13 is a schematic perspective view of the vehicle controller and a key card.

### [Fig. 14]

Fig. 14 is a plan view of the key card.

### [Fig. 15]

Fig. 15 is a front view of the key card.

### [Fig. 16]

Fig. 16 is a perspective view of the motorcycle, showing the arrangement of components.

### [Fig. 17]

Fig. 17 is a diagrammatic view of the controller of the vehicle controller.

### [Fig. 18]

Fig. 18 is a circuit diagram of the electric system of the controller.

### [Fig. 19]

Fig. 19 is a block diagram of a control circuit included in the controller, for controlling a carburetor solenoid.

### [Fig. 20]

Fig. 20 is a longitudinal sectional view of a carburetor.

### [Fig. 21]

Fig. 21 is a sectional view of the carburetor.

### [Fig. 22]

Fig. 22 is a graph showing ignition timing characteristic in connection with the opening of the throttle valve, engine speed and ignition timing.

### [Fig. 23]

Fig. 23 is a longitudinal sectional view of a traveling speed sensor.

### [Fig. 24]

Fig. 24 is a flow chart of a control procedure for controlling the solenoid of a steering bar locking unit.

### [Fig. 25]

Fig. 25 is a diagrammatic view of assistance in explaining banks for controlling recording of total travel distance.

### [Fig. 26]

Fig. 26 is a diagram of assistance in explaining a procedure for resetting trip distance.

### [Fig. 27]

Fig. 27 is a flow chart of a procedure for locking the steering bar and detecting the condition of the key card.

### [Fig. 28]

Fig. 28 is a schematic perspective view of the controller and a racing key card.

### [Fig. 29]

Fig. 29 is a graph of assistance in explaining an ignition timing characteristic for timing the ignition of the front cylinder of an engine.

### [Fig. 30]

Fig. 30 is a graph of assistance in explaining an ignition timing characteristic for timing the ignition of the rear cylinder of the engine.

### [Fig. 31]

Fig. 31 is a graph of assistance in explaining an RC valve opening characteristic.

### [Fig. 32]

Fig. 32 is graph of assistance in explaining the characteristic of a carburetor solenoid.

### [Fig. 33]

Fig. 33 is a plan view of assistance in explaining indications on a multifunction display in a racing mode.

### [REFERENCE CHARACTERS]

| | | | |
|---|---|---|---|
| 300 | Motorcycle | 302 | Body frame |
| | | | |
| 320 | Housing | 322 | Locking member |
| 385 | Operating lever | 386 | Vehicle controller |
| 388 | Main control unit | 390 | Indicator unit |
| 394, 396 | Indicators | 408 | Function switch |
| 410 | Multifunction display | 424 | Key card |
| 426 | Key member | 428 | Case |
| 436 | IC card | 450 | CPU |
| 452 | EEPROM | 600 | Racing key card |
| 602 | IC card | | |

## Claims

1. A vehicle controller comprising an engine control unit (388) provided with an electric circuit for starting and stopping an engine of a vehicle (300) mounted on the body frame (302) of the vehicle, wherein said vehicle controller comprises a data rewriting means for replacing engine control data stored beforehand in the engine control unit (388) with engine control data stored in a storage means (436) of the key card (424, 600) cooperating with the engine control unit (388), **characterized in that** said vehicle controller comprises at least two key cards (424, 600) each of which is adapted to control the operation of the engine in cooperation with the engine control unit (388) and each of which comprises said storage means (436) capable of storing engine control data which are necessary for the operation of the engine control unit (388) and which comprise ignition timing characteristic data, air-fuel-mixture control characteristic data, or other engine control characteristic data,
wherein said engine control data stored in each storage means (436) of said at least two key cards (424, 600) is different for providing at least two different modes of operation of the engine.

## Patentansprüche

1. Fahrzeugsteuervorrichtung mit einer Maschinensteuer/Regeleinheit (388), die mit einer elektrischen Schaltung zum Starten und Stoppen einer Maschine eines Fahrzeugs (300), die am Karosserierahmen (302) des Fahrzeugs montiert ist, versehen ist, wobei die Fahrzeugsteuervorrichtung ein Datenumschreibemittel zum Ersetzen von im voraus in der Maschinensteuer/Regeleinheit (388) gespeicherten Maschinensteuer/Regeldaten durch in einem Speichermittel (436) einer Schlüsselkarte (424, 600) gespeicherte Maschinensteuer/Regeldaten in Kooperation mit der Maschinensteuer/Regeleinheit (388) umfaßt, **dadurch gekennzeichnet, daß** die Fahrzeugsteuervorrichtung wenigstens zwei Schlüsselkarten (424, 600) umfaßt, von denen jede dafür ausgelegt ist, den Betrieb der Maschine in Kooperation mit der Maschinensteuer/Regeleinheit (388) zu steuern, und von denen jede das Speichermittel (436) umfaßt, das Maschinensteuer/Regeldaten speichern kann, die für den Betrieb der Maschinensteuer/Regeleinheit (388) erforderlich sind und Zündsteuerungscharakteristik-Daten, Luft-Kraftstoff-Gemisch-Regelcharakteristik-Daten oder andere Maschinensteuer/Regelcharakteristik-Daten umfassen; wobei
die in jedem Speichermittel (436) der wenigstens zwei Schlüsselkarten (424, 600) gespeicherten Maschinensteuer/Regeldaten verschieden sind, um wenigstens zwei verschiedene Betriebsmodi der Maschine bereitzustellen.

## Revendications

1. Dispositif de commande de véhicule comprenant une unité de commande de moteur (388) munie d'un circuit électrique pour démarrer et arrêter un moteur d'un véhicule (300) monté sur le châssis (302) du véhicule, dans lequel ledit dispositif de commande de véhicule comprend un moyen de réécriture de données pour remplacer des données de commande de moteur préalablement stockées dans l'unité de commande de moteur (388) par des données de commande de moteur stockées dans un moyen de stockage (436) de la carte-clé (424, 600) coopérant avec l'unité de commande de moteur (388), **caractérisé en ce que** ledit dispositif de commande de véhicule comprend au moins deux cartes-clés (424, 600) dont chacune est apte à commander le fonctionnement du moteur en coopération avec l'unité de commande de moteur (388) et dont chacune comprend ledit moyen de stockage (436) capable de stocker des données de commande du moteur qui sont nécessaires au fonctionnement de l'unité de commande de moteur (388) et qui comprennent des données de caractéristiques de calage de l'allumage, des données caractéristiques de commande du mélange air-carburant, ou d'autres données caractéristiques de commande du moteur,
dans lequel lesdites données de commande du moteur stockées dans chaque moyen de stockage (436) desdites au moins deux cartes-clés (424, 600) sont différentes afin de permettre au moins deux modes de fonctionnement différents du moteur.
